# EUROPÄISCHE PATENTSCHRIFT

(11) **EP 1 974 981 B1**
(45) Veröffentlichungstag und Bekanntmachung des Hinweises auf die Patenterteilung: **21.11.2018**
(21) Anmeldenummer: 08004210.4
(22) Anmeldetag: 07.03.2008
(51) Int. Cl.: B60K 35/00

(54) **Verfahren und Vorrichtung zum Anzeigen von Zuständen von Einrichtungen eines Fahrzeuges**
Method and device for displaying the state of devices in an automobile
Procédé et dispositif d'affichage d'états de dispositifs d'un véhicule

(30) Priorität: 27.03.2007 DE 102007014530
(43) Veröffentlichungstag der Anmeldung: 01.10.2008
(73) Patentinhaber: Volkswagen Aktiengesellschaft, 38440 Wolfsburg (DE)
(72) Erfinder: Lemke, Katja, 38124 Braunschweig (DE); Bobzin, Christof, 38106 Braunschweig (DE); Grüder, Christoph, 38102 Braunschweig (DE)

(56) Entgegenhaltungen:
- WO-A2-2006/108617
- DE-A1- 19 919 155
- DE-A1-102005 020 260

## Beschreibung

Die vorliegende Erfindung betrifft ein Verfahren zum Anzeigen von Zuständen von Einrichtungen eines Fahrzeugs. Bei dem erfindungsgemäßen Verfahren werden die Zustände der Fahrzeugeinrichtungen erfasst und an eine Steuereinrichtung ükertragen. Für die Visualisierung der Fahrzeugeinrichtung werden Bilddaten erzeugt, die von einer Anzeigevorrichtung in dem Fahrzeug wiedergegeben werden. Ferner betrifft die Erfindung eine Vorrichtung zum Anzeigen von Zuständen von Fahrzeugeinrichtungen. Die Vorrichtung umfasst Sensoren zum Erfassen der Zustände der Fahrzeugeinrichtungen und eine Steuereinrichtung, die mit den Sensoren gekoppelt ist. Die Steuereinrichtung umfasst eine Bilddatenerzeugungseinheit zum Erzeugen einer graphischen Darstellung. Diese graphische Darstellung wild von einer Anzeigevorrichtung angezeigt.

Moderne Kraftfahrzeuge stellen ein äußerst komplexes Gesamtsystem dar, bei dem eine Vielzahl von Fahrzeugzuständen vom Fahrzeugführer überwacht werden müssen. Falls die Fahrzeugzustände kritische Werte erreichen, die ein unmittelbares Handeln des Fahrzeugführers erforderlich machen, ist es notwendig, dass sichergestellt wird, cass der Fahrzeugführer die graphische Darstellung, welche den kritischen Zustand visualisiert, auch wahrnimmt. Des Weiteren werden in modernen Kraftfahrzeugen dem Fahrzeugführer eine Vielzahl von Informationen visualisiert. Hierbei ergibt sich das Problem, dass es vermie den werden soll, dass der Fahrzeugführer durch die graphische Darstellung der Informationen vom Führen des Fahrzeugs abgelenkt wird.

Aus der DE 199 41 962 C2 ist ein Verfahren und eine Vorrichtung zur Informationsaufbereitung von Fahrzeugzuständen und Umgebungsiriformationen beschrieben. Dabei werden die Fahrzeugzustandsdaten und Umgebungsdaten funktional untergliedert. Wählt der Nutzer bestimmte Informationen aus, werden aufbereitete Informationen auf der Anzeigeeinheit dargestellt, wobei durch ein Steuergerät erfasste kritische Fahrzeugzustände optisch und/oder piktogrammförmig hervorgehoben dargestellt werden.

Aus der DE 199 39 065 A1 ist eine Multifunktionsbedieneinrichtung bekannt, bei deren Anzeige die Daten objektbezogen zusammengefasst sind und als Objekt Icons dargestellt sind, wobei innerhalb eines Objekt-Icons die Komfortgeräte objektbezogen ansteuerbar sind. Unter dem Begriff "Objekt" wird in dieser Druckschrift eine natürliche Person, ein Gebäude oder eine Institution verstanden.

Aus der DE 36 28 333 A1 ist schließlich eine Multifunktionsanzege für Kraftfahrzeuge bekannt, bei der auf einer Anzeigefläche mehrere Funktionen nach Betätigen eines zugehörigen Funktionsschalters darstellbar sind. Ferner ist mindestens ein Auswahlschalter für jeweils eine Gruppe von Funktionen und eine Reihe von Funktionsschaltern vorgesehen, die entsprechend dem betätigten Auswahlschalter den Funktionen aus dieser Gruppe einzeln zugeordnet sind und bei deren Betätigen diese Funktionen anstelle der bei nicht betätigtem Auswahlschalter dargestellten Funktionen auf der Anzeigefläche dargestellt sind.
Es ist die Aufgabe der vorliegenden Erfindung, ein Verfahren und eine Vorrichtung der eingangs genannten Art bereitzustellen, mit denen Zustände von Fahrzeugeinrichtungen einem Fahrzeuginsassen so dargestellt werden können, dass sie von dem Fahrzeuginsassen schnell und intuitiv erfasst werden können. Insbesondere sollen die Zustände der Fahrzeugeinrichtungen dem Fahrzeugführer so dargestellt werden, dass er vom Führen des Fahrzeugs so wenig wie möglich abgelenkt wird. Gleichzeitig solles jedoch möglich sein, den Fahrzeugführer mit einer Vielzahl verschiedenartiger Informationen zu versorgen.
Diese Aufgabe wird durch ein Verfahren mit den Merkmalen des Anspruchs 1 und einer Vorrichtung mit den Merkmalen des Anspruchs 9 gelöst. Vorteilhafte Aus- und Weiterbildungen ergeben sich aus den Unteransprüchen.

Erfindungsgemäß wird somit einerseits eine graphische Darstellung des Fahrzeugs erzeugt und andererseits eine graphische Darstellung der Fahrzeugeinrichtung, deren Zustand visualisiert werden soll, erzeugt. Diese beiden graphischen Darstellungen werden in den für die Anzeige vorgesehenen Bilddaten so miteinander verknüpft, dass die Anordnung der dargestellten Fahrzeugeinrichtung in der graphischen Darstellung des Fahrzeugs in Wesentlichen der realen Anordnung der Fahrzeugeinrichtung in dem Fahrzeug entspricht. Diese Art der Visualisierung ist für den Betrachter, der sich im Fahrzeuginnenraum befindet, besonders verständlich und leicht erfassbar, da er üblicherweise weiß, wo sich im realen Fahrzeug die entsprechende Fahrzeugeinrichtung findet. Bei dieser Art der Visualisierung ist es somit vielfach nicht mehr erforderlich, ergänzende Texthinweise zu der Fahrzeugeinrichtung zu geben die erst vom Betrachter gelesen und interpretiert werden müssen.

Gemäß einer bevorzugten Ausgestaltung des erfindungsgemäßen Verfahrens ist die graphische Darstellung des Fahrzeugs und/oder der Fahrzeugeinrichtung bzw. der Fahrzeugeinrichtungen ein Oberflächenhüllenmodell, wobei die Transparenz der Darstellung des Oberflächenhüllenmodells des Fahrzeugs so gewählt wird, dass die dargestellte Fahrzeugeinrichtung bzw. die dargestellten Fahrzeugeinrichtungen sichtbar sind. Auf der Anzeigevorrichtung des Fahrzeugs wird somit das gleiche Fahrzeug verkleinert und bevorzugt als dreidimensionales Oberflächenhüllenmodell dargestellt. Bevorzugt entspricht die Ausrichtung der graphischen Darstellung des Fahrzeugs bei der Wiedergabe durch die Anzeigevorrichtung der Ausrichtung des realen Fahrzeugs aus Sicht des Betrachters der Anzeigevorrichtung.

Gemäß einer bevorzugten Weiterbildung des erfindungsgemäßen Verfahrens werden Videobilddaten erzeugt, bei denen in Richtung einer Fahrzeugeinrichtung gezoomt wird, die visualisiert werden soll. Beispielsweise wird zunächst das gesamte Fahrzeug und ggfs. in diesem Fahrzeug hervorgehoben die zu visualisierende Fahrzeugeinrichtung dargestellt. Daraufhin kann im Rahmen der Benutzerführung oder automatisch in Richtung der betreffenden Fahrzeugeinrichtung gezoomt werden, wobei das Oberflächenhüllenmodell des Fahrzeugs an der Stelle aufbricht, an der sich die betreffende Fahrzeugeinrichtung befindet.

Die Daten für die Oberflächenhüllenmodelle für das Fahrzeug und die Fahrzeugeinrichtungen sind bevorzugt in einem Speicher gespeichert. Sie können bei Bedarf von der Steuereinrichtung zum Erzeugen der Bilddaten abgerufen werden.

Der Zustand der Fahrzeugeinrichtung, welcher visualisiert werden soll, kann als Zahlenangabe oder Textangabe neben die visualisierte Fahrzeugeinrichtung geschrieben werden. Bevorzugt wird jedoch der Zustand einer dargestellten Fahrzeugeinrichtung durch die Art der graphischen Darstellung der zugehörigen Fahrzeugeinrichtung visualisiert. Betrifft beispielsweise der Zustand einen Bestand eines Behälters einer Fahrzeugeinrichtung, ist bevorzugt der Behälter in der graphischen Darstellung der Fahrzeugeinrichtung enthalten. Der Füllstand kann in diesem Fall in Relation zur dargestellten Behältergröße visualisiert werden. Ist beispielsweise der Behälter zu einem Drittel gefüllt kann das untere Drittel des dargestellten Behälters in einer anderen Farbe dargestellt sein.

Gemäß einer weiteren bevorzugten Ausgestaltung des erfindungsgemäßen Verfahrens kann ermittelt werden, ob eine Warnmeldung ausgegeben werden soll. Falls dies der Fall ist, wird ein Wamsymbol in Verbindung mit der graphischen Darstellung der zugehörigen Fahrzeugeinrichtung angezeigt.

Gemäß einer bevorzugten Weiterbildung des erfindungsgemäße n Verfahrens sind mehrere Anzeigevorrichtungen vorgesehen. In diesem Fall werden die Biddaten auf einer dieser Anzeigevorrichtungen wiedergegeben, die vom Fahrer am nächsten zu der Blickrichtung zu der Fahrzeugeinrichtung liegt, die in der graphischen Darstellung enthalten ist. In diesem Fall wird somit die Anordnung der dargestellten Fahrzeugeinrichtung nicht nur graphisch in die graphische Darstellung des Fahrzeugs integriert. Es wird auch bei der Auswahl der Anzeigevorrichtung für die Anzeige die Position der dargestellten Fahrzeugeinrichtung berücksichtigt. Der Fahrer kann auf diese Weise die visualisierte Fahrzeugeinrichtung noch intuitiver und schneller erfassen, da sie in einer Blickrichtung dargestellt wird, die der tatsächlichen Position der Fahrzeugeinrichtung nahe kommt.

Bei den Anzeigevorrichtungen kann es sich um ein so genanntes Head-up-Display in der Windschutzscheibe des Fahrzeugs, ein Display im Kombiinstrument für den Fahrer, ein Display in der Mittelkonsole des Fahrzeugs und/oder ein Display auf der Beifahrerseite des Fahrzeugs handeln.

Die erfindungsgemäße Vorrichtung zum Anzeigen von Zuständen von Fahrzeugeinrichtungen umfasst Sensoren zum Erfassen der Zustände der Fährzeugeinrichtungen und eine Steuereinrichtung, die mit den Sensoren gekoppelt ist. Die Steuereinrichtung umfasst eine Bilddatenerzeugungseinheit zum Erzeugen einer graphischen Darstellung der Fahrzeugeinrichtung und ihres Zustands in einer graphischen Darstellung des Fahrzeugs, wobei die Anordnung der Fahrzeugeinrichtung in dem Fahrzeug in der graphischen Darstellung im Wesentlichen der realen Anordnung entspricht. Ferner umfasst die Vorrichtung eine Anzeigevorrichtung zum Anzeigen der von der Bilddatenerzeugungseinheit erzeugten graphischen Darstellung.

Mit der Bilddatenerzeugungseinheit ist als graphische Darstellung des Fahrzeugs und/oder der Fahrzeugeinrichtung bzw. der Fahrzeugeinrichtungen ein Oberflächenhüllenmodell erzeugbar, wobei die Transparenz der Darstellung des Oberflächenhüllenmodells des Fahrzeugs so gewählt ist, dass die dargestellte Fahrzeugeinrichtung bzw. die dargestellten Fahrzeugeinrichtungen sichtbar sind.

Die Vorrichtung weist bevorzugt einen Speicher auf, in dem die Daten für die Oberflächenhüllenmodelle für das Fahrzeug und die Fahrzeugeinrichtungen gespeichert sind.

Schließlich kann die Vorrichtung mehrere Anzeigevorrichtungen enthalten, die an verschiedenen Positionen für zumindest den Fahrer sichtbar sind. Die Steuereinrichtung ist in diesem Fall so ausgebildet, dass sie die von der Bilddatenerzeugungseinheit erzeugte graphische Darstellung auf der Anzeigevorrichtung anzeigt, die vom Fahrer am nächsten zu der Blickrichtung zu der Fahrzeugeinrichtung liegt, die in der graphischen Darstellung enthalten ist.

Die Erfindung wird nunmehr anhand eines Ausführungsbeispiels mit Bezug zu den Zeichnungen erläutert.

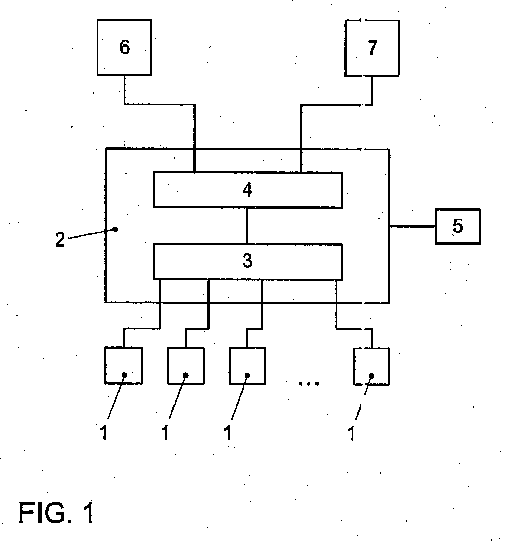

- Figur 1: zeigt schematisch den Aufbau eines Ausführungsbeispiels der erfindungsgemäßen Vorrichtung,
- Figur 2: zeigt die Darstellung des Fahrzeugs ohne Fahrzeugeinrichtungen,
- Figur 3: zeigt die Darstellung des Fahrzeugs, in welcher eine graphische Darstellung der Scheibenwaschanlage integriert ist,
- Figur 4: zeigt einen Ausschnitt der in Figur 3 gezeigten Darstellung, welche den Wischwasserbehälter sowie den Füllzustand des Wischwasserbehälters visualisiert,
- Figur 5: zeigt die Anordnung der Anzeigevorrichtungen eines Ausführungsbeispiels der erfindungsgemäßen Vorrichtung und
- Figur 6: zeigt eine virtuelle dreidimensionale Projektion in Echtzeit, die innerhalb des Fahrzeuginnenraums für eine Reifendruckwarnung dargestellt wird.

Die Vorrichtung umfasst Sensoren 1 zum Erfassen von Zuständen verschiedener Einrichtungen des Fahrzeugs. Die Sensoren 1 können den Füllstand diverser Behälter für Betriebsflüssigkeiten des Fahrzeugs erfassen, wie z. B. die Füllstände der Behälter für Kraftstoff, Motoröl, Kühlmittel, Bremsflüssigkeit und Wischwasser. Des Weiteren könner die Sensoren 1 die Funktionsfähigkeit der im Fahrzeug verwendeten Lichtquellen, insbesondere für die Scheinwerfer und Beleuchtungseinrichtungen des Fahrzeugs erfassen. Des Weiteren können die Sensoren 1. den Luftdruck in den Reifen des Fahrzeugs, die Temperatur des Kühlwassers und den Ladezustand der Batterie des Fahrzeugs erfassen.

Die Messergebnisse der Sensoren 1 werden an die Steuereinrichtung 2 übertragen. Die Steuereinrichtung 2 umfasst ggfs. eine Bewertungseinheit 3, die ermittelt, ob der Zustand einer oder mehrerer Fahrzeugeinrichtungen einem Fahrzeuginsassen visualisiert werden soll. Eine Visualisierung eines Zustands der Fahrzeugeinrichtung kann beispielsweise auf eine Abfrage eines Fahrzeuginsassen erfolgen, welche über eine Eingabeeinheit be tätigt worden ist. Ferner können Zustände in Abhängigkeit von der Größe des Messwerts eir es Sensors 1 visualisiert werden, beispielsweise, wenn ein bestimmter Schwellwert unter- oder überschritten wird. In diesem Fall wird automatisch eine Warnmeldung zum Zustand der betreffenden Fahrzeugeinrichtung ausgegeben.

Nachdem die Bewertungseinheit 3 ermittelt hat, welche Fahrzeugeinrichtungen und welcher Zustand visualisiert werden soll, wird diese Information an die B Iddatenerzeugungseinheit 4 übertragen. Die Bilddatenerzeugungseinheit 4 erzeugt eine graphische Darstellung der Fahrzeugeinrichtung, deren Zustand visualisiert werden soll, in einer graphischen Darstellung des Fahrzeugs. Dabei entspricht die Anordnung der Fahrzeugeinricftung in dem Fahrzeug in der graphischen Darstellung im Wesentlichen der realen Anordnung. Um die Bilddaten zu erzeugen greift die Bilddatenerzeugungseinheit 4 auf einen Speicher 5 zu, in welchem Daten gespeichert sind, aus denen sich Oberflächenhüllenmodelle des Fahrzeugs selbst und der darstellbaren Fahrzeugeinrichtungen erzeugbar sind. Ferner sind in dem Speicher 5 Daten gespeichert, welche die relative Anordnung der Fahrzeugeinrichtungen in dem Fahrzeug anzeigen. Des Weiteren lassen sich aus den in dem Speicher 5 gespeicherten Daten verschiedene dreidimensionale perspektivische Darstellungen der Oberflächenhüllenmodelle und verschiedene Rissansichten erzeugen.

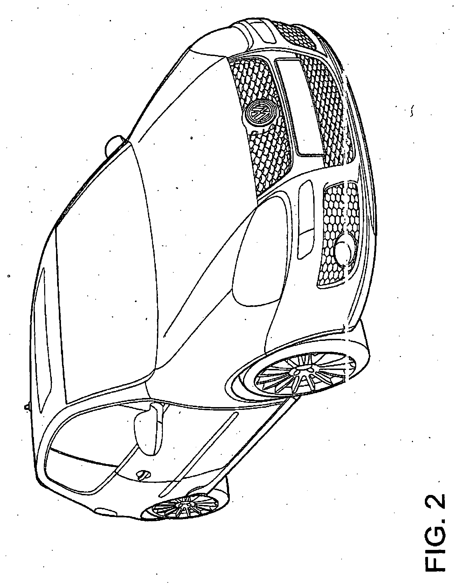

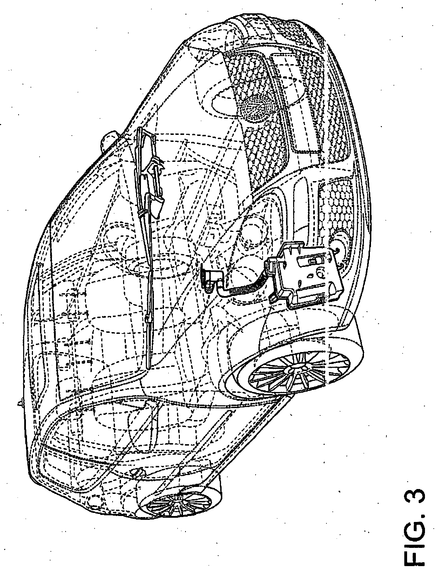

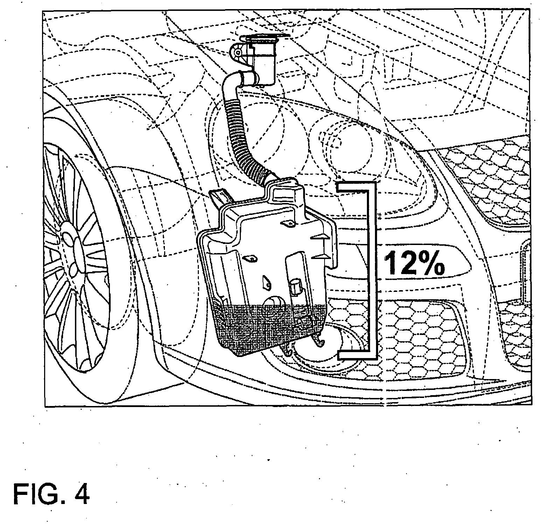

In Figur 2 ist ein Oberflächenhüllenmodell des Fahrzeugs gezeigt wie es von der Bilddatenerzeugungseinheit 4 generiert worden ist. Wenn die Bilddatenerzeugungseinheit 4 von der Bewertungseinheit 3 die Information erhalten hat, es soll der Füllstand des Wischwasserbehälters dargestellt werden, erzeugt die Bilddatenerzeugungseinheit 4 eine graphische Darstellung wie sie in Figur 3 gezeigt ist. Zum Erzeugen dieser Bilddaten greift die Bilddatenerzeugungseinheit 4 auf die im Speicher 5 gespeicherten Fahrzeugdaten zurück. Das in Figur 2 gezeigte Oberflächenhüllenmodell des Fahrzeugs wird zumindest in den Bereichen transparent, die Teile der Scheibenwischvorrichtung zeigen. Der Wischwasserbehälter und die zugehörigen Leitungen und Düsen werden auch als Oberflächenhüllenmodell in dem transparenten Oberflächenhüllenmodell des Fahrzeugs dargestellt. Um den Füllstand des Wischwasserbehälters zu visualisieren, erzeugt die Bilddatenerzeugungseinheit 4 Videobilder, die ein Zoomen in Richtung des Wischwasserbehälters darstellen, bis die in Figur 4 gezeigte Anzeige erzeugt wurde. Diese zeigt vergrößert den Wischwasserbehälter. Der Füllstand wird dadurch visualisiert, dass ein Teil des Wischwasserbehälters andersfarbig dargestellt ist. Ferner kann neben dem Wischwasserbehälter eine Zahlenangabe "12 Prozent", geschrieben werden, um zusätzlich numerisch exakt den Füllstand des Wischwasserbehälters darzustellen.

Bei den Videobilddaten, die ein Zoomen in Richtung des Wischwasserbehälters darstellen, könnte auch ausgehend von der in Figur 2 gezeigten graphischen Darstellung die Oberfläche des Fahrzeugs aufbrechen, wenn die Detailansicht durch die Oberfläche hindurchtritt, wodurch eine Ansicht des Wischwasserbehälters freigegeben wird. Beispielsweise kann mittels einer Risszeichnung der unter der Motorhaube befindliche Behälter m t dem Wischwasser freigegeben werden. Ferner kann der Behälter transparent dargestellt sein, um zu visualisieren, wie viel Wasser sich im Behälter befindet.

In gleicher Weise können andere Zustandsanzeigen wie beispielsweise für den Kraftstofffüllstand, den Ölfüllstand, den Reifenluftdruck oder die Batterieladung erfolgen. Hierbei wird immer die jeweilige Fahrzeugeinrichtung in einer graphischen Darstellung des Fahrzeugs visualisiert, damit der Betrachter besonders schnell und intuitiv erkennen kann, zu welcher Fahrzeugeinrichtung ein Zustand angezeigt wird. Der Zustand selbst kann alphanumerisch dargestellt werden. Bevorzugt wird er jedoch auch in der graphischen Darstellung der Fahrzeugeinrichtung visualisiert.

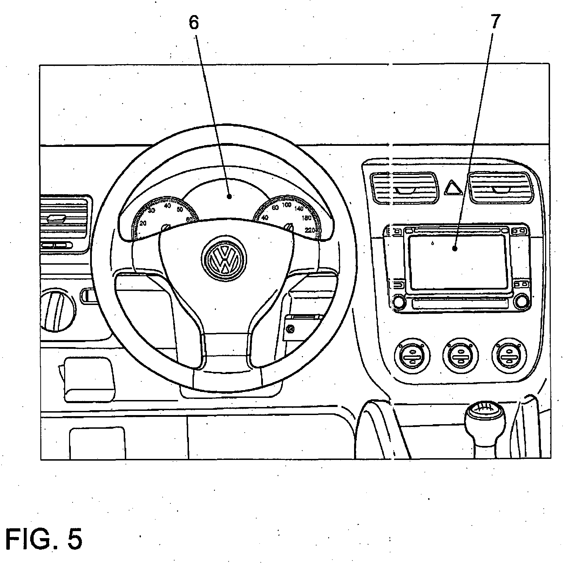

Die Bilddatenerzeugungseinheit 4 ist mit mehreren Anzeigevorrichtungen 6 und 7 verbunden. Diese Anzeigevorrichtungen 6 und 7 zeigen die in den Figuren 2 bis 4 gezeigten graphischen Darstellungen an. Eine mögliche Anordnung der Anzeigevorrichungen 6 und 7 ist in Figur 5 gezeigt. Die Anzeigevorrichtung 6 ist im Kombiinstrument des Fahrzeugs angeordnet und die Anzeigevorrichtung 7 in der Mittelkonsole.

Der Zustand einer Fahrzeugeinrichtung kann in beiden Anzeigevorrichtungen 6 und 7 angezeigt werden, es besteht jedoch auch die Möglichkeit, dass er nur vor einer Anzeigevorrichtung einer Vielzahl von Anzeigevorrichtungen dargestellt wird. In diesem Fall sind die Positionen der Anzeigevorrichtungen auch in dem Speicher 5 gespeichert. Anhand der in dem Speicher 5 gespeicherten Daten entscheidet die Bilddatenerzeugungseinheit 4, welche Anzeigevorrichtung der Blickrichtung des Fahrers zu der Fahrzeugeinrichtung, die visualisiert werden soll, am nächsten kommt. Die Bilddatenerzeugungseinheit 4 berechnet in diesem Fall eine graphische Darstellung für diese eine Anzeigevorrichtung, wobei die Perspektive berücksichtigt wird, die sich aus der Blickrichtung des Fahrers in Richtung der zu visualisierenden Fahrzeugeinrichtung ergibt.

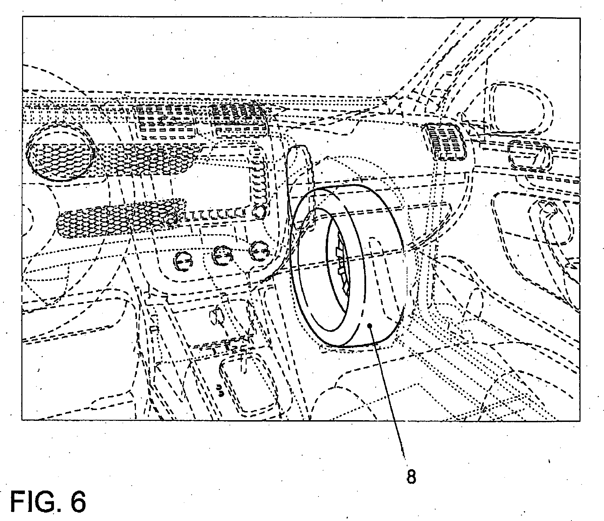

In Figur 6 ist beispielsweise die graphische Darstellung einer Reifendruckwarnung gezeigt. Die Reifendruckwarnung wird in diesem Fall von einer Anzeigevorrichtung visualisiert, die in bzw. nahe der Blickrichtung des Fahrers zu dem betreffenden Reifen angeordnet ist. In dem in Figur 6 gezeigten Fall handelt es sich um eine virtuelle dreidimensionale Projektion in Echtzeit, die innerhalb des Fahrzeuginnenraums dargestellt wird. Es wird ein Ausschnitt des Fahrzeugs und in einer Signalfarbe der Reifen 8 dargestellt, dessen Reifendruck unter einen Schwellwert abgefallen ist.

### Bezugszeichenliste

- 1: Sensoren
- 2: Steuereinrichtung
- 3: Bewertungseinheit
- 4: Bilddatenerzeugungseinheit
- 5: Speicher
- 6, 7: Anzeigevorrichtungen
- 8: Darstellung eines Reifens

## Patentansprüche

1. Verfahren zum Anzeigen von Zuständen von Einrichtungen eines Fahrzeugs, bei dem
die Zustände der Fahrzeugeinrichtungen erfasst und an eine Steuereinrichtung (2) übertragen werden,
Bilddaten für eine graphische Darstellung einer Fahrzeugeinrichtung und ihres Zustands in einer graphischen Darstellung des Fahrzeugs erzeugt werden, wobei die Anordnung der Fahrzeugeinrichtung in dem Fahrzeug in der graphischen Darstellung im Wesentlichen der realen Anordnung entspricht, und
die Bilddaten von einer Anzeigevorrichtung (6, 7) in dem Fahrzeug wiedergegeben werden,
**dadurch gekennzeichnet,**
**dass** die Ausrichtung der graphischen Darstellung des Fahrzeugs bei der Wiedergabe durch die Anzeigevorrichtung (6, 7) der Ausrichtung des realen Fahrzeugs aus Sicht des Betrachters der Anzeigevorrichtung (6, 7) entspricht, wobei bei der Berechnung der Ausrichtung der graphischen Darstellung des Fahrzeugs die Position der Anzeigevorrichtung (6, 7) und die Perspektive berücksichtigt wird, die sich aus der Blickrichtung des Fahrers in Richtung der zu visualisierenden Fahrzeugeinrichtung ergibt.

2. Verfahren nach Anspruch 1,
**dadurch gekennzeichnet,**
**dass** die graphische Darstellung des Fahrzeugs und/oder der Fahrzeugeinrichtung(en) ein Oberflächenhüllenmodell ist, wobei die Transparenz der Darstellung des Oberflächenhüllenmodells des Fahrzeugs so gewählt wird, dass die dargestellte(n) Fahrzeugeinrichtung(en) sichtbar ist/sind.

3. Verfahren nach einem der vorstehenden Ansprüche,
**dadurch gekennzeichnet,**
**dass** Videobilddaten erzeugt werden, bei denen in Richtung einer Fahrzeugeinrichtung gezoomt wird, die visualisiert werden soll.

4. Verfahren nach einem der Ansprüche 2 oder 3,
**dadurch gekennzeichnet,**
**dass** die Daten für die Oberflächenhüllenmodelle für das Fahrzeug und die Fahrzeugeinrichtungen in einem Speicher (5) gespeichert sind.

5. Verfahren nach einem der vorstehenden Ansprüche,
**dadurch gekennzeichnet,**
**dass** der Zustand einer dargestellten Fahrzeugeinrichtung durch die Art der graphischen Darstellung der zugehörigen Fahrzeugeinrichtung visualisiert wird.

6. Verfahren nach Anspruch 5,
**dadurch gekennzeichnet,**
**dass** der Zustand einen Füllstand eines Behälters einer Fahrzeugeinrichtung betrifft, dass der Behälter in der graphischen Darstellung der Fahrzeugeinrichtung enthalten ist und dass der Füllstand in Relation zur dargestellten Behältergröße visualisiert wird.

7. Verfahren nach einem der vorstehenden Ansprüche,
**dadurch gekennzeichnet,**
**dass**, falls eine Warnmeldung ausgegeben werden soll, ein Warnsymbol in Verbindung mit der graphischen Darstellung der zugehörigen Fahrzeugeinrichtung angezeigt wird.

8. Verfahren nach einem der vorstehenden Ansprüche,
**dadurch gekennzeichnet,**
**dass** mehrere Anzeigevorrichtungen (6, 7), vorgesehen sind und dass die Bilddaten auf derjenigen Fahrtanzeigevorrichtung wiedergegeben wird, die vom Fahrer am nächsten zu der Blickrichtung zu der Fahrzeugeinrichtung liegt, die in der graphischen Darstellung enthalten ist.

9. Vorrichtung zum Anzeigen von Zuständen von Einrichtungen eines Fahrzeugs umfassend:
Sensoren (1) zum Erfassen der Zustände der Fahrzeugeinrichtungen,
eine Steuereinrichtung (2), die mit den Sensoren (1) gekoppelt ist und die eine Bilddatenerzeugungseinheit (4) zum Erzeugen einer graphischen Darstellung einer Fahrzeugeinrichtung und ihres Zustands in einer graphischen Darstellung des Fahrzeugs umfasst, wobei die Anordnung der Fahrzeugeinrichtung in dem Fahrzeug in der graphischen Darstellung im Wesentlichen der realen Anordnung entspricht, und
eine Anzeigevorrichtung (6, 7) zum Anzeigen der von der Bilddatenerzeugungseinheit (4) erzeugten graphischen Darstellung, **dadurch gekennzeichnet, dass**
mit der Bilddatenerzeugungseinheit (4) die graphische Darstellung so erzeugbar ist, dass die Ausrichtung der graphischen Darstellung des Fahrzeugs bei der Wiedergabe durch die Anzeigevorrichtung (6, 7) der Ausrichtung des realen Fahrzeugs aus Sicht des Betrachters der Anzeigevorrichtung (6, 7) entspricht, wobei bei der Berechnung der Ausrichtung der graphischen Darstellung des Fahrzeugs die Position der Anzeigevorrichtung (6, 7) und die Perspektive berücksichtigt wird, die sich aus der Blickrichtung des Fahrers in Richtung der zu visualisierenden Fahrzeugeinrichtung ergibt.

10. Vorrichtung nach Anspruch 9,
**dadurch gekennzeichnet,**
**dass** mit der Bilddatenerzeugungseinheit (4) als graphische Darstellung des Fahrzeugs und/oder der Fahrzeugeinrichtung(en) ein Oberflächenhüllenmodell erzeugbar ist, wobei die Transparenz der Darstellung des Oberflächenhüllenmodells des Fahrzeugs so gewählt ist, dass die dargestellte(n) Fahrzeugeinrichtung(en) sichtbar ist/sind.

11. Vorrichtung nach Anspruch 9 oder 10,
**dadurch gekennzeichnet,**
**dass** die Vorrichtung einen Speicher (5) aufweist, in dem Daten für die Oberflächenhüllenmodelle für das Fahrzeug und die Fahrzeugeinrichtungen gespeichert sind.

12. Vorrichtung nach einem der Ansprüche 9 bis 11,
**dadurch gekennzeichnet,**
**dass** die Vorrichtung mehrere Anzeigevorrichtungen (6, 7) enthält, die an verschiedenen Positionen für zumindest den Fahrer sichtbar sind, und dass die Steuereinrichtung (2) so ausgebildet ist, dass sie die von der Bilddatenerzeugungseinheit (4) erzeugte graphische Darstellung auf der Anzeigevorrichtung anzeigt, die vom Fahrer am nächsten zu der Blickrichtung zu der Fahrzeugeinrichtung liegt, die in der graphischen Darstellung enthalten ist.

## Claims

1. Method for displaying states of devices in a vehicle, in which
the states of the vehicle devices are captured and are transmitted to a control device (2),
image data for a graphical representation of a vehicle device and its state in a graphical representation of the vehicle are generated, wherein the arrangement of the vehicle device in the vehicle in the graphical representation corresponds substantially to the actual arrangement, and
the image data are reproduced by a display apparatus (6, 7) in the vehicle,
**characterized**
**in that** the orientation of the graphical representation of the vehicle in the reproduction by the display apparatus (6, 7) corresponds to the orientation of the actual vehicle from the point of view of the viewer of the display apparatus (6, 7), wherein the position of the display apparatus (6, 7) and the perspective resulting from the viewing direction of the driver in the direction of the vehicle device to be visualized are taken into account when calculating the orientation of the graphical representation of the vehicle.

2. Method according to Claim 1,
**characterized**
**in that** the graphical representation of the vehicle and/or of the vehicle device(s) is a surface envelope model, wherein the transparency of the representation of the surface envelope model of the vehicle is selected in such a manner that the represented vehicle device(s) is/are visible.

3. Method according to one of the preceding claims,
**characterized**
**in that** video image data are generated, in the case of which zooming is carried out in the direction of a vehicle device which is intended to be visualized.

4. Method according to either of Claims 2 and 3,
**characterized**
**in that** the data for the surface envelope models for the vehicle and the vehicle devices are stored in a memory (5).

5. Method according to one of the preceding claims,
**characterized**
**in that** the state of a represented vehicle device is visualized by the type of graphical representation of the associated vehicle device.

6. Method according to Claim 5,
**characterized**
**in that** the state relates to a filling level of a container of a vehicle device, in that the container is included in the graphical representation of the vehicle device, and in that the filling level is visualized in relation to the represented container size.

7. Method according to one of the preceding claims,
**characterized**
**in that**, if a warning message is intended to be output, a warning symbol is displayed in conjunction with the graphical representation of the associated vehicle device.

8. Method according to one of the preceding claims,
**characterized**
**in that** a plurality of display apparatuses (6, 7) are provided, and in that the image data are reproduced on that journey display apparatus which, from the driver, is closest to the viewing direction with respect to the vehicle device which is included in the graphical representation.

9. Apparatus for displaying states of devices in a vehicle, comprising:
sensors (1) for capturing the states of the vehicle devices,
a control device (2) which is coupled to the sensors (1) and comprises an image data generation unit (4) for generating a graphical representation of a vehicle device and its state in a graphical representation of the vehicle, wherein the arrangement of the vehicle device in the vehicle in the graphical representation corresponds substantially to the actual arrangement, and
a display apparatus (6, 7) for displaying the graphical representation generated by the image data generation unit (4),
**characterized in that**
the image data generation unit (4) can be used to generate the graphical representation in such a manner that the orientation of the graphical representation of the vehicle in the reproduction by the display apparatus (6, 7) corresponds to the orientation of the actual vehicle from the point of view of the viewer of the display apparatus (6, 7), wherein the position of the display apparatus (6, 7) and the perspective resulting from the viewing direction of the driver in the direction of the vehicle device to be visualized are taken into account when calculating the orientation of the graphical representation of the vehicle.

10. Apparatus according to Claim 9,
**characterized**
**in that** the image data generation unit (4) can be used to generate a surface envelope model as a graphical representation of the vehicle and/or of the vehicle device(s), wherein the transparency of the representation of the surface envelope model of the vehicle is selected in such a manner that the represented vehicle device(s) is/are visible.

11. Apparatus according to Claim 9 or 10,
**characterized**
**in that** the apparatus has a memory (5) which stores data for the surface envelope models for the vehicle and the vehicle devices.

12. Apparatus according to one of Claims 9 to 11,
**characterized**
**in that** the apparatus contains a plurality of display apparatuses (6, 7) which are visible to at least the driver at different positions, and in that the control device (2) is designed in such a manner that it displays the graphical representation generated by the image data generation unit (4) on that display apparatus which, from the driver, is closest to the viewing direction with respect to the vehicle device which is included in the graphical representation.

## Revendications

1. Procédé pour afficher des états de dispositifs d'un véhicule, selon lequel
les états des dispositifs de véhicule sont détectés et transmis à un dispositif de commande (2),
des données d'image sont générées pour une représentation graphique d'un dispositif de véhicule et de son état dans une représentation graphique du véhicule, la disposition du dispositif de véhicule dans le véhicule dans la représentation graphique correspondant sensiblement à la disposition réelle, et les données d'état sont restituées par un arrangement d'affichage (6, 7) dans le véhicule,
**caractérisé en ce**
**que** l'orientation de la représentation graphique du véhicule lors de la restitution par l'arrangement d'affichage (6, 7) correspond à l'orientation du véhicule réel du point de vue de l'observateur de l'arrangement d'affichage (6, 7), la position de l'arrangement d'affichage (6, 7) ainsi que la perspective qui résulte de la direction d'observation du conducteur en direction du dispositif de véhicule à visualiser étant prises en compte lors du calcul de l'orientation de la représentation graphique du véhicule.

2. Procédé selon la revendication 1, **caractérisé en ce que** la représentation graphique du véhicule et/ou du ou des dispositifs de véhicule est un modèle de coque superficielle, la transparence de la représentation du modèle de coque superficielle du véhicule étant choisie de telle sorte que le ou les dispositifs de véhicule représenté (s) est/sont visibles.

3. Procédé selon l'une des revendications précédentes, **caractérisé en ce que** des données vidéo sont générées, avec lesquelles un zoom est effectué en direction d'un dispositif de véhicule qui doit être visualisé.

4. Procédé selon l'une des revendications 2 ou 3, **caractérisé en ce que** les données pour le modèle de coque superficielle pour le véhicule et les dispositifs de véhicule sont enregistrées dans une mémoire (5).

5. Procédé selon l'une des revendications précédentes, **caractérisé en ce que** l'état d'un dispositif de véhicule représenté est visualisé par le type de représentation graphique du dispositif de véhicule associé.

6. Procédé selon la revendication 5, **caractérisé en ce que** l'état concerne un niveau de remplissage d'un contenant d'un dispositif de véhicule, **en ce que** le contenant est inclus dans la représentation graphique du dispositif de véhicule et **en ce que** le niveau de remplissage est visualisé en relation avec la taille de contenant représentée.

7. Procédé selon l'une des revendications précédentes, **caractérisé en ce que** dans le cas où un message d'alerte doit être délivré, un symbole d'alerte est affiché avec la représentation graphique du dispositif de véhicule associé.

8. Procédé selon l'une des revendications précédentes, **caractérisé en ce que** plusieurs arrangements d'affichage (6, 7) sont présents et **en ce que** les données d'image sont restituées sur l'arrangement d'affichage de conduite qui, depuis le conducteur, se trouve le plus proche de la direction d'observation vers le dispositif de véhicule qui est inclus dans la représentation graphique.

9. Arrangement pour afficher des états de dispositifs d'un véhicule, comprenant :
des capteurs (1) servant à détecter les états des dispositifs de véhicule,
un dispositif de commande (2), qui est connecté aux capteurs (1) et comporte une unité de génération de données d'image (4) destinée à générer une représentation graphique d'un dispositif de véhicule et de son état dans une représentation graphique du véhicule, la disposition du dispositif de véhicule dans le véhicule dans la représentation graphique correspondant sensiblement à la disposition réelle, et
un arrangement d'affichage (6, 7) destiné à afficher la représentation graphique générée par l'unité de génération de données d'image (4),
**caractérisé en ce que**
la représentation graphique peut être générée avec l'unité de génération de données d'image (4) de telle sorte que l'orientation de la représentation graphique du véhicule lors de la restitution par l'arrangement d'affichage (6, 7) correspond à l'orientation du véhicule réel du point de vue de l'observateur de l'arrangement d'affichage (6, 7), la position de l'arrangement d'affichage (6, 7) ainsi que la perspective qui résulte de la direction d'observation du conducteur en direction du dispositif de véhicule à visualiser étant prises en compte lors du calcul de l'orientation de la représentation graphique du véhicule.

10. Arrangement selon la revendication 9, **caractérisé en ce qu'**un modèle de coque superficielle peut être généré avec l'unité de génération de données d'image (4) en tant que représentation graphique du véhicule et/ou du ou des dispositifs de véhicule, la transparence de la représentation du modèle de coque superficielle du véhicule étant choisie de telle sorte que le ou les dispositifs de véhicule représenté(s) est/sont visibles.

11. Arrangement selon la revendication 9 ou 10, **caractérisé en ce que** l'arrangement comprend une mémoire (5) dans laquelle sont enregistrées des données pour le modèle de coque superficielle du véhicule et les dispositifs de véhicule.

12. Arrangement selon l'une des revendications 9 à 11, **caractérisé en ce que** l'arrangement contient plusieurs arrangements d'affichage (6, 7), qui sont visibles en différentes positions au moins pour le conducteur, et **en ce que** le dispositif de commande (2) est configuré de telle sorte qu'il affiche la représentation graphique générée par l'unité de génération de données d'image (4) sur l'arrangement d'affichage qui, depuis le conducteur, se trouve le plus proche de la direction d'observation vers le dispositif de véhicule qui est inclus dans la représentation graphique.
